# EUROPÄISCHE PATENTSCHRIFT

(11) **EP 0 612 267 B1**
(45) Veröffentlichungstag und Bekanntmachung des Hinweises auf die Patenterteilung: **02.08.1995**
(21) Anmeldenummer: 92922015.0
(22) Anmeldetag: 22.10.1992
(51) Int. Cl.: B01D 53/02, B01J 8/12, B01D 46/34

(54) **FILTER ZUR REINIGUNG VON FLUIDSTRÖMEN**
FILTER FOR CLEANING FLUIDS
FILTRE POUR LE NETTOYAGE DE COURANTS DE FLUIDES

(30) Priorität: 29.10.1991 DE 9113450 U
(43) Veröffentlichungstag der Anmeldung: 31.08.1994
(73) Patentinhaber: Forschungszentrum Karlsruhe GmbH, 76133 Karlsruhe (DE)
(72) Erfinder: WANDER, Volker, D-6749 Oberotterbach (DE)
(74) Vertreter: Gottlob, Peter, Dipl. Ing.
(86) Internationale Anmeldenummer: DE9200883
(87) Internationale Veröffentlichungsnummer: WO9308898

(56) Entgegenhaltungen:
- EP-A- 0 057 468
- CH-A- 665 136
- DE-B- 2 820 650
- DE-C- 815 640
- DE-C- 3 303 038

## Beschreibung

Die Erfindung betrifft ein Filter zur Reinigung von Fluidströmen gemäß dem Oberbegriff des Anspruchs 1.

Häufig ist es erforderlich, bestimmte Bestandteile eines Gasgemisches aus diesem zu entfernen. Dies ist z. B. bei der Gasanalyse der Fall, wenn ein zu analysierendes Gasgemisch Komponenten enthält, welche die Analyse beeinträchtigen oder gar das Analysengerät beschädigen können. Zum Entfernen der unerwünschten Komponenten wird im allgemeinen in den Gasstrom eine Absorberpatrone eingesetzt, die mit einem Reagenz gefüllt ist, das spezifisch die unerwünschte Komponente, z. B. durch chemische Reaktion oder Adsorption, bindet. Da das Reagenz verbraucht wird, muß die Patrone von Zeit zu Zeit ausgewechselt werden, wodurch der Meßbetrieb unterbrochen ist.

In der DE-C-33 03 038 ist eine Filteranlage beschrieben, mit der Schadstoffe aus Luft- oder Gasströmen kontinuierlich ausgeschieden werden können. Es werden zwei verschiedene Sorptionsmaterialien zum Ausscheiden unterschiedlicher Schadstoffe verwendet, die über je eine Zellenradschleuse aus zwei Vorratsbehältern in eine Filterkammer rieseln. Die Drehzahl einer dritten Zellenradschleuse, durch welche die mit Schadstoffen beladenen Sorptionsmaterialien aus der Filterkammer abfließen, ist so geregelt, daß der Füllstand der Sorptionsmaterialien in der Filterkammer konstant bleibt. Diese bekannte Filteranlage ist für den Einsatz in großtechnischen Anlagen, wie Kläranlagen, bestimmt. Ihre Verwendung zum Reinigen von sehr kleinen Gasmengen, wie sie Analysengeräten zugeführt werden, ist kaum möglich.

Die EP-A-0 057 468 beschreibt eine Gasreinigungs-Vorrichtung mit einem Reaktionsraum, welcher zwei Schleusen zur Zu- bzw. Abfuhr von teilchenförmigen Adsorptionsmittel sowie je einen Gasein- bzw. Auslaß aufweist, durch die das zu reinigende Gas quer durch das im Reaktionsraum befindliche Adsorptionsmittel strömt.

Der vorliegenden Erfindung liegt die Aufgabe zugrunde, ein Filter zum Reinigen von Fluidströmen zu schaffen, mit dem ein kontinuierlicher Betrieb möglich ist und das sich durch ein kleines Totvolumen und einfachen Aufbau auszeichnet.

Erfindungsgemäß wird diese Aufgabe mit dem im kennzeichnenden Teil des Anspruchs 1 angegebenen Merkmal gelöst.

Dadurch, daß die Zellenradschleusen, deren Drehachse in der Rohrachseliegt, gleichzeitig Wände des Reaktionsraumes sind, kann dieser und damit das Totvolumen auf das notwendige Minimum verkleinert werden. Der Vorratsraum, der Reaktionsraum und der Abfallraum sind in einem einzigen geraden Rohr mit über die Länge konstantem Querschnitt untergebracht, das lediglich durch die beiden Schleusen unterteilt ist. Es ergibt sich so ein kompakter und einfacher Aufbau. Die beiden Schleusen können von einem Motor über eine gemeinsame Achse angetrieben sein.

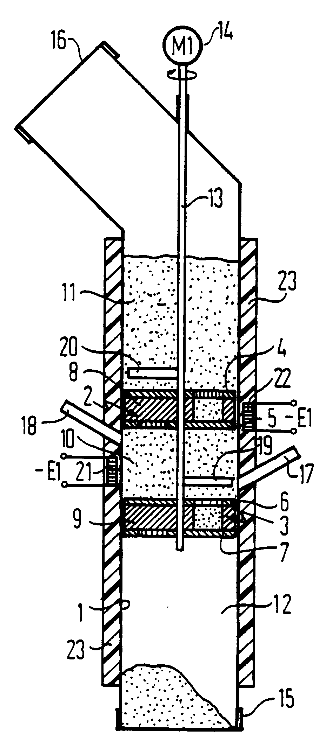

Anhand der Zeichnung, in der ein Ausführungsbeispiel dargestellt ist, sind im folgenden Weiterbildungen und Ergänzungen der Erfindung näher beschrieben und erläutert.

In einem Rohr 1 sind zwei Zellenradschleusen 2, 3 angebracht, die jeweils aus zwei feststehenden Scheiben 4, 5 bzw. 6, 7 und einer drehbaren Scheibe 8 bzw. 9 bestehen. Die beiden drehbaren Scheiben sitzen auf einer Achse 13, die in der Achse des Rohres 1 verläuft und durch die Wand eines oberen abgewinkelten Teils des Rohres geführt und von einem Motor 14 angetrieben ist. Das Rohr ist an beiden Enden mit je einem Deckel 15, 16, zweckmäßig gasdicht verschlossen. Durch die beiden Zellenradschleusen 2, 3 ist es in drei Räume unterteilt, einen zwischen den Schleusen liegenden Reaktionsraum 10, einen über der oberen Schleuse liegenden Vorratsraum 11 und einen Abfallraum 12. In den Reaktionsraum 10 wird über eine Einlaßöffnung 17 ein Gasgemisch eingeleitet, aus dem mindestens eine Komponente abzuscheiden ist. Über einen Auslaß 18 strömt das gereinigte Gas aus. Der Reaktionsraum 10 ist mit einem Reagenz gefüllt, welches die unerwünschte Gaskomponente durch Absorption oder chemische Reaktion bindet. Das Reagenz wird dabei verbraucht bzw. mit der unerwünschten Gaskomponente beladen und wird durch frisches Reagenz aus dem Vorratsraum 11 ersetzt.

Die feststehenden und die drehbaren Scheiben der Zellenradschleusen 2, 3 weisen je eine Bohrung auf, die in gleichem radialem Abstand angebracht sind, wobei die Bohrungen der beiden feststehenden Scheiben um einen Winkel, im Ausführungsbeispiel um 180°, gegeneinander versetzt sind. Die Bohrungen haben gleichen radialen Abstand, so daß die eine Zelle bildende Bohrung der drehbaren Scheibe 8 beim Drehen der Scheibe abwechselnd durch die Bohrung in der feststehenden Scheibe 4 mit dem Vorratsraum 11 und durch die Bohrung in der feststehenden Scheibe 5 mit dem Reaktionsraum 10 verbunden ist. Entsprechend ist die Zelle der sich drehenden Scheibe 9 abwechselnd mit dem Vorratsraum 11 und dem Abfallraum 12 verbunden. In der in der Figur gezeichneten Stellung werden die Zellen der drehbaren Scheiben 8, 9 mit rieselfähigem Reagenz aus dem Vorratsraum 11 bzw. dem Reaktionsraum 10 gefüllt. Nach einer Drehung um 180° sind die Zellen über den Bohrungen in den unteren feststehenden Scheiben 5, 7, so daß der Zelleninhalt in den Reaktionsraum 10 bzw. in den Abfallraum 12 fällt. Die nun leeren Zellen werden wieder unter die Bohrungen in den oberen feststehenden Scheiben 4, 6 gedreht, wo sie sich abermals mit Reagenz füllen. Durch Verändern der Drehzahl des Motors kann das Filter an das zu reinigende Gas und den Gasdurchsatz angepaßt werden. Vorzugsweise ist die Zelle in der Scheibe 9 etwas kleiner als die in der Scheibe 8, damit die Förderleistung der unteren Schleuse kleiner als die der oberen ist und eine vollständige Füllung des Reaktionsraumes 10 sichergestellt ist. Selbstverständlich können die Scheiben auch mehrere Bohrungen aufweisen, so daß die Förderleistung bei gleicher Drehzahl erhöht ist bzw. bei gleicher Förderleistung eine niedrigere Drehzahl ausreicht. Im Ausführungsbeispiel sind die Schleusen so angebracht, daß die Bohrungen in den oberen feststehenden Scheiben sowie die in den unteren feststehenden Scheiben jeweils übereinanderliegen. Selbstverständlich können die beiden Schleusen auch gegeneinander verdreht sein. Im Reaktionsraum 10 und im Vorratsraum 11 ist an der Achse 13 jeweils ein Rührstift 19, 20 angebracht, der das Reagenz durchmischt und das Entstehen von Hohlräumen im Reagenz verhindert und außerdem das Füllen der Zellen unterstützt.

Der Gaseinlaß 17 und der Gasauslaß 18 sind in unterschiedlicher Höhe angebracht, und zwar der Gaseinlaß niedriger als der Gasauslaß, so daß der Gasstrom und die Bewegung des Reagenz zwecks guter Reinigung des Gases und Ausnutzung des Reagenz einander entgegengerichtet sind.

Zumindest im Bereich des Reaktionsraumes 10 ist das Rohr mit Heizwicklungen 21, 22 versehen, mit denen der Reaktionsraum beheizt werden kann. Das gesamte Rohr ist mit einer Wärmeisolation 23 umgeben.

Das verbrauchte Reagenz kann durch Abnehmen des Deckels 15 während des Betriebes entfernt werden. Ebenso kann nach Abnehmen des Deckels 16 neues Reagenz durch den als Einfüllstutzen ausgebildeten, abgewinkelten oberen Teil des Rohres nachgefüllt werden. Zum erstmaligen Befüllen des Reaktionsraumes kann Reagenz durch die Auslaßöffnung 18 eingefüllt werden, oder es wird die Bohrung in der unteren feststehenden Scheibe 7 der unteren Schleuse 3 mit einem Stopfen verschlossen und der Motor bei gefülltem Vorratsraum 11 eingeschaltet, bis der Reaktionsraum mit Reagenz gefüllt ist. Nach Entfernen des Stopfens und Aufsetzen des Deckels 15 ist das Filter betriebsbereit.

## Patentansprüche

1. Filter zur Reinigung von Fluidströmen mit einem Reaktionsraum (10), der eine Einlaßöffnung (17) für das zu reinigende Fluid und eine Auslaßöffnung (18) für das gereinigte Fluid sowie eine erste Zellenradschleuse (2), durch die frisches Reagenz zugeführt wird, und eine zweite Zellenradschleuse (3) zur Abfuhr von verbrauchtem Reagenz aufweist, **dadurch gekennzeichnet,** daß die beiden Zellenradschleusen (2, 3) in einem Rohr (1) mit über die Länge konstantem Querschnitt eingesetzt sind, derart, daß die Drehachse der Zellenradschleusen (2, 3) in der Rohrachse liegt und daß der Innenraum des Rohres in drei Räume unterteilt ist, in den Reaktionsraum (10) zwischen den Zellenradschleusen (2, 3), einen an die erste Zellenradschleuse (2) angrenzenden, mittels eines Deckels (16) lösbar verschlossenen Vorratsraum (11) und einen an die zweite Zellenradschleuse (3) angrenzenden, mittels eines Deckels (15) lösbar verschlossenen Abfallraum (12), und daß in der Rohrwand die Einlaßöffnung (17) und die Auslaßöffnung (18) angebracht sind.

2. Filter nach Anspruch 1, **dadurch gekennzeichnet,** daß die Zellenradschleusen (2, 3) von einem Motor (14) über eine gemeinsame Achse (13) angetrieben sind.

3. Filter nach Anspruch 2, **dadurch gekennzeichnet,** daß die Zelle der zweiten Schleuse (3) kleiner als die der ersten Schleuse (2) ist.

4. Filter nach Anspruch 2 oder 3, **dadurch gekennzeichnet,** daß an der Achse (13) im Reaktionsraum (10) und/oder dem Vorratsraum (11), vorzugsweise unmittelbar über der jeweiligen Zellenradschleuse (2, 3), ein Rührstift (19, 20) befestigt ist.

5. Filter nach einem der Ansprüche 1 bis 4, **dadurch gekennzeichnet,** daß die Einlaßöffnung (17) und die Auslaßöffnung (18) auf gegenüberliegenden Seiten des Reaktionsraums (10) angeordnet sind.

6. Filter nach einem der Ansprüche 1 bis 5, **dadurch gekennzeichnet,** daß die Einlaßöffnung in der Nähe der zweiten Schleuse (3) und die Auslaßöffnung in der Nähe der ersten Schleuse (2) angeordnet ist.

7. Filter nach einem der Ansprüche 2 bis 6, **dadurch gekennzeichnet,** daß sich an den Vorratsraum (11) unter einem Winkel ein Einfüllstutzen anschließt, durch dessen Seitenwand die Antriebsachse (13) geführt ist.

8. Filter nach einem der Ansprüche 2 bis 7, **dadurch gekennzeichnet,** daß auf das Rohr zumindest im Bereich des Reaktionsraumes (10) eine Heizung aufgebracht ist.

9. Filter nach Anspruch 8, **dadurch gekennzeichnet,** daß das Rohr (1) wärmeisoliert ist.

## Claims

1. Filter for cleaning fluid streams, with a reaction space (10) equipped with an inlet port (17) for the fluid to be cleaned and an outlet port (18) for the cleaned fluid as well as a first star wheel valve (2) through which fresh reagent is supplied and a second star wheel valve (3) for evacuation of exhausted reagent, characterized by the two star wheel valves (2, 3) being installed in a tube (1) with constant cross section over its length in such a manner that the axis of rotation of the star wheel valves (2, 3) lies in the tube axis and that the tube interior is subdivided into three spaces, namely the reaction space (10) between the star wheel valves (2, 3), a storage space (11) adjacent to the first star wheel valve (2) and closed by means of a detachable lid (16), and a waste space (12) adjacent to the second star wheel valve (3) and closed by means of a detachable lid (15), and by the inlet port (17) and the outlet port (18) being provided at the tube wall.

2. Filter as claimed in 1, with the star wheel valves (2, 3) driven by a motor (14) via a joint axle (13).

3. Filter as claimed in 2, with the cell of the second-valve (3) being smaller than that of the first valve (2).

4. Filter as claimed in 2 or 3, with stirring pins (19, 20) attached to the axle (13) in the reaction space (10) and/or in the storage space (11), preferably immediately above the respective star wheel valve (2, 3).

5. Filter as claimed in one of claims 1 through 4, with the inlet port (17) and the outlet port (18) provided on opposed sides of the reaction space (10).

6. Filter as claimed in one of claims 1 through 5, with the inlet port provided in the vicinity of the second valve (3) and the outlet port in the vicinity of the first valve (2).

7. Filter as claimed in one of claims 2 through 6, with a filler connection provided adjacent to the storage space (11) at a given angle, through the lateral wall of which storage space the driving axle (13) is routed.

8. Filter as claimed in one of claims 2 through 7, with at least one heater provided on the tube in the area of the reaction space (10).

9. Filter as claimed in 8, with the tube (1) being thermally insulated.

## Revendications

1. Filtre pour épurer des courants de fluides avec une chambre de réaction (10), qui présente un orifice d'entrée (17) du fluide à épurer et un orifice de sortie (18) du fluide épuré ainsi qu'une première écluse à roue et à cellules (2) par où passe le réactif frais et une deuxième écluse à roue et à cellules (3) pour soutirer le réactif usé, caractérisé en ce que les deux écluses à roue et à cellules (2, 3) sont implantées dans un tube (1) de section constante sur toute la longueur, de sorte que l'axe de rotation des écluses à roue et à cellules (2, 3) est dans l'axe du tube et que le volume intérieur du tube est partagé en trois chambres, à savoir la chambre de réaction (10) délimitée par les écluses à roue et à cellules (2, 3), un réservoir (11) contigu à la première écluse à roue et à cellules (2), fermé de manière amovible par un couvercle (16) et une chambre de déchets (12) contiguë à la deuxième écluse (3) à roue et à cellules fermée de manière amovible par un couvercle (15) et qu'on installe dans la paroi du tube l'orifice d'entrée (17) et l'orifice de sortie (18).

2. Filtre selon la revendication 1, caractérisé en ce qu'un moteur (14) entraîne les écluses à roue et à cellules (2, 3) par l'intermédiaire d'un axe commun (13).

3. Filtre selon la revendication 2, caractérisé en ce que la cellule de la deuxième écluse (3) est plus petite que celle de la première écluse (2).

4. Filtre selon la revendication 2 ou 3, caractérisé en ce qu'on fixe sur l'axe (13) dans la chambre de réaction (10) et/ou dans le réservoir (11) un doigt d'agitation (19, 20), de préférence directement au-dessus de l'écluse à roue et à cellules (2, 3) associée.

5. Filtre selon l'une des revendications 1 à 4, caractérisé en ce que l'orifice d'entrée (17) et l'orifice de sortie (18) sont implantés en des endroits diamétralement opposés de la chambre de réaction (10).

6. Filtre selon l'une des revendications 1 à 5, caractérisé en ce que l'orifice d'entrée est à proximité de la deuxième écluse (3) et que l'orifice de sortie est à proximité de la première écluse (2).

7. Filtre selon l'une des revendications 2 à 6, caractérisé en ce qu'une tubulure de remplissage se raccorde obliquement au réservoir (11), l'axe de l'entraînement (13) traverse sa paroi latérale.

8. Filtre selon l'une des revendications 2 à 7, caractérisé en ce qu'on implante un chauffage sur le tube au moins dans le domaine de la chambre de réaction (10).

9. Filtre selon la revendication 8, caractérisé en ce que le tube (1) est isolé thermiquement.
